(19) Europäisches Patentamt
European Patent Office
Office européen des brevets

(11) **EP 4 546 099 A1**

(12) **EUROPEAN PATENT APPLICATION**

(43) Date of publication:
**30.04.2025 Bulletin 2025/18**

(21) Application number: **24204991.4**

(22) Date of filing: **07.10.2024**

(51) International Patent Classification (IPC):
**G06F 3/04815** (2022.01)  **G06F 3/14** (2006.01)

(52) Cooperative Patent Classification (CPC):
**G06F 3/04815; G06F 3/1423; G06T 19/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.10.2023 TW 112140954**

(71) Applicant: **Optoma Coporation
New Taipei City 231633 (TW)**

(72) Inventors:
• **Wang, Wen-Tai
231633 New Taipei City (TW)**
• **Tsui, Yuan-Mao
231633 NEW TAIPEI CITY (TW)**

(74) Representative: **Ter Meer Steinmeister & Partner
Patentanwälte mbB
Nymphenburger Straße 4
80335 München (DE)**

(54) **COLLABORATION DISPLAY SYSTEM AND OPERATION METHOD THEREOF**

(57)     A collaboration display system and an operation method thereof are provided. The collaboration display system includes a first display device, at least one second display device and a processing device. The at least one second display device communicatively connects to the first display device by Internet. The processing device communicatively connects to the at least one second display device by the Internet. The processing device executes a collaboration application. The first display device provides a mode menu by the collaboration application. In response to one of a plurality of display mode in the mode menu being selected, the first display device displays at least one three-dimensional object with a first viewing angle and the at least one second display device displays the three-dimensional object with a second viewing angle. The first viewing angle is different from the second viewing angle.

FIG. 1

EP 4 546 099 A1

**Description**

This application claims Taiwan application serial no. 112140954, filed on October 26, 2023.

BACKGROUND

Technical Field

The disclosure relates to a collaboration display system and an operation method thereof, and particularly relates to a collaboration display system having two-dimensional display devices for displaying a three-dimensional object, so that people are adapted to view the three-dimensional object from different viewing angles in the collaboration display system.

Description of Related Art

A conventional technology of displaying a three-dimensional object (3D object) through two-dimensional display devices may flatten display content of the three-dimensional object. Although a user may view content presented from other angles of the three-dimensional object by rotating the display content, this method may only rotate the three-dimensional object itself. In other words, the display content viewed by all users on the two-dimensional display devices is the same, and different users cannot view the three-dimensional object from different angles at the same time.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY

The disclosure is directed to a collaboration display system and an operation method thereof, which are adapted to implement an interactive display and collaboration functions of at least one three-dimensional object on two-dimensional display devices for multiple people and multiple viewing angles.

Additional aspects and advantages of the disclosure will be set forth in the description of the techniques disclosed in the disclosure.

The object is solved by the features of the independent claims. Preferred embodiments are given in the dependent claims.

In order to achieve one or a portion of or all of the objects or other objects, an embodiment of the disclosure provides a collaboration display system including a first display device, at least one second display device and a processing device. The at least one second display device is communicatively connected to the first display device by Internet. The processing device is communicatively connected to the at least one second display device by the Internet. The processing device executes a collaboration application. The first display device provides a mode menu for displaying through the collaboration application. In response to one of multiple display modes in the mode menu being selected, the first display device displays at least one three-dimensional object with a first viewing angle and the at least one second display device displays the at least one three-dimensional object with a second viewing angle. The first viewing angle is different from the second viewing angle.

In an embodiment of the disclosure, in response to a following mode among the display modes being selected, the first viewing angle may be different from the second viewing angle, and the second viewing angle may be associated with the first viewing angle.

In an embodiment of the disclosure, in response to an exploration mode among the display modes being selected, the first viewing angle may be different from the second viewing angle, and the second viewing angle may not be associated with the first viewing angle.

In an embodiment of the disclosure, in response to a teaching mode among the display modes being selected, the first viewing angle may be equal to the second viewing angle, and the second viewing angle may be changed based on the first viewing angle.

In an embodiment of the disclosure, in response to the collaboration application being executed by the processing device, the collaboration application may establish three-dimensional coordinate system based on the at least one three-dimensional object.

In an embodiment of the disclosure, in response to one of the display modes being selected, through the collaboration application, the processing device may output image data of the at least one three-dimensional object with the second viewing angle to the at least one second display device based on the selected display mode and the three-dimensional coordinate system.

In an embodiment of the disclosure, the mode menu includes at least one device option respectively corresponding to the at least one second display device. In response to one of the display modes and at least one of the at least one device option being selected, through the collaboration application, the processing device may output image data of the at least one three-dimensional object with the second viewing angle to the at least one second display device corresponding to the selected device option based on the selected display mode, the three-dimensional coordinate system and the selected device option.

In an embodiment of the disclosure, the processing device may be provided in the first display device.

In an embodiment of the disclosure, the processing device may be provided in a cloud server.

In order to achieve one or a portion of or all of the objects or other objects, an embodiment of the disclosure provides an operation method of a collaboration display system including following steps: providing a mode menu by a first display device in response to a collaboration application being executed by a processing device; and in response to one of multiple display modes in the mode menu being selected, displaying at least one three-dimensional object with a first viewing angle by the first display device, and displaying the at least one three-dimensional object with a second viewing angle by at least one second display device, wherein the first viewing angle is different from the second viewing angle.

In an embodiment of the disclosure, wherein in response to a following mode among the plurality of display modes being selected, the first viewing angle may be different from the second viewing angle, and the second viewing angle may be associated with the first viewing angle.

In an embodiment of the disclosure, wherein in response to an exploration mode among the plurality of display modes being selected, the first viewing angle may be different from the second viewing angle, and the second viewing angle may not be associated with the first viewing angle.

In an embodiment of the disclosure, wherein in response to a teaching mode among the plurality of display modes being selected, the first viewing angle may be equal to the second viewing angle, and the second viewing angle may be changed based on the first viewing angle.

In an embodiment of the disclosure, the operation method may further include: in response to the collaboration application being executed by the processing device, establishing a three-dimensional coordinate system by the collaboration application based on the at least one three-dimensional object.

In an embodiment of the disclosure, the operation method may further include: in response to one of the display modes being selected, through the collaboration application, outputting image data of the at least one three-dimensional object with the second viewing angle to the at least one second display device by the processing device based on the selected display mode and the three-dimensional coordinate system.

In an embodiment of the disclosure, the mode menu may include at least one device option respectively corresponding to the at least one second display device, and the operation method may further include: in response to one of the display modes and at least one of the at least one device option being selected, through the collaboration application, outputting image data of the at least one three-dimensional object with a second viewing angle to the at least one second display device corresponding to the selected device option by the processing device based on the selected display mode, the three-dimensional coordinate system and the selected device option.

In order to achieve one or a portion of or all of the objects or other objects, an embodiment of the disclosure may provide a non-transitory processing device readable medium storing a collaboration application, executed by the processing device to perform an operation method, the method comprising: providing a mode menu by a first display device in response to the collaboration application being executed; and in response to one of a plurality of display modes in the mode menu being selected, displaying at least one three-dimensional object with a first viewing angle by the first display device, and displaying the at least one three-dimensional object with a second viewing angle by at least one second display device, wherein the first viewing angle is different from the second viewing angle.

Based on the above description, the collaboration display system and its operation method of the disclosure may establish a three-dimensional coordinate system of at least one three-dimensional object through a collaboration application, and provide image data of the at least one three-dimensional object to at least one second display device based on the display mode and the three-dimensional coordinate system, so as to implement the interactive display and collaboration functions of the at least one three-dimensional object on the two-dimensional display devices for multiple people and multiple viewing angles.

To make the aforementioned more comprehensible, several embodiments accompanied with drawings are described in detail as follows.

Other objectives, features and advantages of the present invention will be further understood from the further technological features disclosed by the embodiments of the present invention wherein there are shown and described preferred embodiments of this invention, simply by way of illustration of modes best suited to carry out the invention.

BRIEF DESCRIPTION OF THE DRAWINGS

The accompanying drawings are included to provide a further understanding, and are incorporated in and constitute a part of this specification. The drawings illustrate embodiments of the disclosure and, together with the description, serve to explain the principles of the disclosure.

FIG. 1 is a schematic diagram of a collaboration display system of an embodiment of the disclosure.
FIG. 2 is a schematic diagram of a collaboration display system of an embodiment of the disclosure.
FIG. 3A is a schematic diagram of a three-dimensional coordinate system of at least one three-dimensional object according to an embodiment of the disclosure.
FIG. 3B is a schematic diagram of a three-dimensional coordinate system according to an embodiment of the disclosure.
FIG. 4A schematic diagram of display images of a first and second displays of an embodiment.
FIG. 4B is a schematic diagram of another following mode of an embodiment of the disclosure.
FIG. 4C is a schematic diagram of an exploration mode of an embodiment of the disclosure.
FIG. 4D is a schematic diagram of a teaching mode according to an embodiment of the disclosure.
FIG. 5 flowchart of an operation method of a collaboration display system of an embodiment.

DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

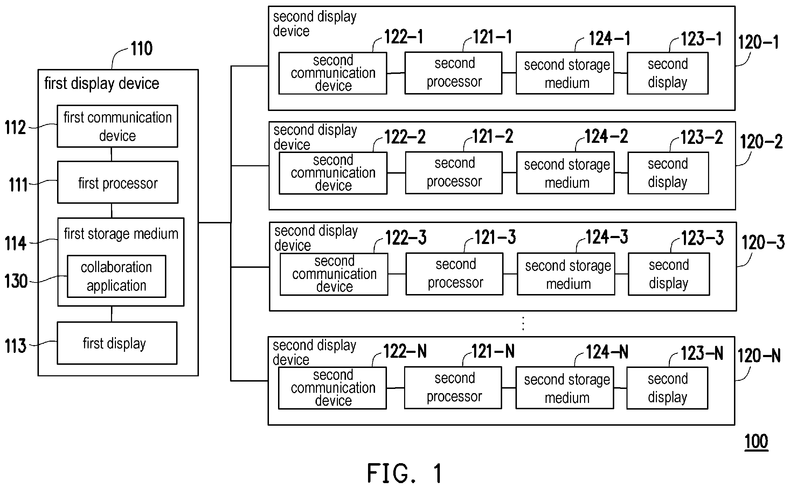

FIG. 1 is a schematic diagram of a collaboration display system according to an embodiment of the disclosure. Referring to FIG. 1, in an embodiment, a collaboration display system 100 includes a first display device 110 and at least one second display device 120-1 to 120-N. Through Internet, the first display device 110 is communicatively connected to the second display device 120-1. Or in an embodiment, the first display device 110 is communicatively connected to the second display devices 120-1 to 120-N, respectively. The Internet is, for example, known to those in the art and is a channel for transmitting information through wireless or wired communication technologies, which is not repeated. The first display device 110 may be, for example, an interactive flat panel (IFP) display device, an electronic whiteboard, a projector device, a light emitting diode display (LED display) or other flat panel display devices, etc., which is not limited by the disclosure. The second display devices 120-1, 120-2, 120-3 to 120-N may be, for example, smart phones, tablet computers, notebook computers, desktop computers or other personal devices, etc., which are not limited by the disclosure.
The first display device 110 includes a first processor 111, a first communication device 112, a first display 113 and a first storage medium 114. The processing device is, for example, the first processor 111. The first storage medium 114 stores a collaboration application 130. The first processor 111 is configured to read the collaboration application 130. The first processor 111 is configured to execute the collaboration application 130. The at least one second display device 120-1 to 120-N respectively include second processors 121-1 to 121-N, second communication devices 122-1 to 122-N, second displays 123-1 to 123-N, and second storage media 124-1 to 123-N. The first communication device 112 and the second communication devices 122-1 to 122-N respectively have a wireless networking function. Through the Internet, the first communication device 112 of the first display device 110 is wirelessly connected to the second display devices 120-1 to 120-N. In other words, through the Internet, the first processor 111 (processing device) is communicatively connected to the at least one second display device 120-1 to 120-N. A number (i.e., an N value) of the second display devices 120-1 to 120-N may be designed according to actual needs, and is not limited by the disclosure.
The first processor 111, the second processors 121-1 to 121-N and the processing device may respectively include, for example, at least one central processing unit (CPU) or a graphics processing unit, (GPU), or other programmable general-purpose or special-purpose microprocessors, digital signal processor (DSP), programmable controller, application specific integrated circuits (ASICs), programmable logic device (PLD), other similar at least one processing chip or at least one circuit, or a combination of these devices.
The first communication device 112 and the second communication devices 122-1 to 122-N may respectively include a wired and/or wireless communication interface and a communication path, and may, for example, adopt a transmission control protocol/Internet protocol (TCP/IP) and other communication protocols to establish connections and communicate.
The first display 113 and the second displays 123-1 to 123-N are used to display images. The first display 113 and the second displays 123-1 to 123-N may be respectively a liquid crystal panel, a light emitting diodes (LED) panel, an organic light emitting diodes (OLED) panel, etc. In other embodiments, the first display 113 and the second displays 123-1 to 123-N may be projection optical engines for displaying images, which is not limited by the disclosure. Those skilled in the field of projection may clearly understand a structure and a function of the projection optical engine, and details thereof are not repeated.

The first storage medium 114 and the second storage media 124-1 to 124-N may respectively include a storage unit (for example, including a dynamic random access memory (DRAM), a flash memory or a non-volatile random access memory (NVRAM), etc.) to store at least relevant programs for executing the collaboration display system of the disclosure. In the embodiment, the collaboration application 130 is provided in the first display device 110. Specifically, the first storage medium 114 of the first display device 110 may store the collaboration application 130. In an embodiment, the second storage media 124-1 to 124-N of the second display devices 120-1 to 120-N also store the collaboration application 130, and the collaboration application 130 serves as an application of a communication protocol between the first display device 110 and the second display devices 120-1 to 120-N. In an embodiment, the first display 113 of the first display device 110 displays an operation interface (not shown), which allows a user of the first display device 110 to operate in the operation interface to control the first processor 111 (processing device) to execute the collaboration application 130. The first display device 110 and the second display devices 120-1 to 120-N are further communicatively connected to their respective operating devices (such as mice or touch devices) respectively. Users of the first display device 110 and the second display devices 120-1 to 120 may respectively control operations of the first display device 110 and the second display devices 120-1 to 120-N respectively through the operating devices.

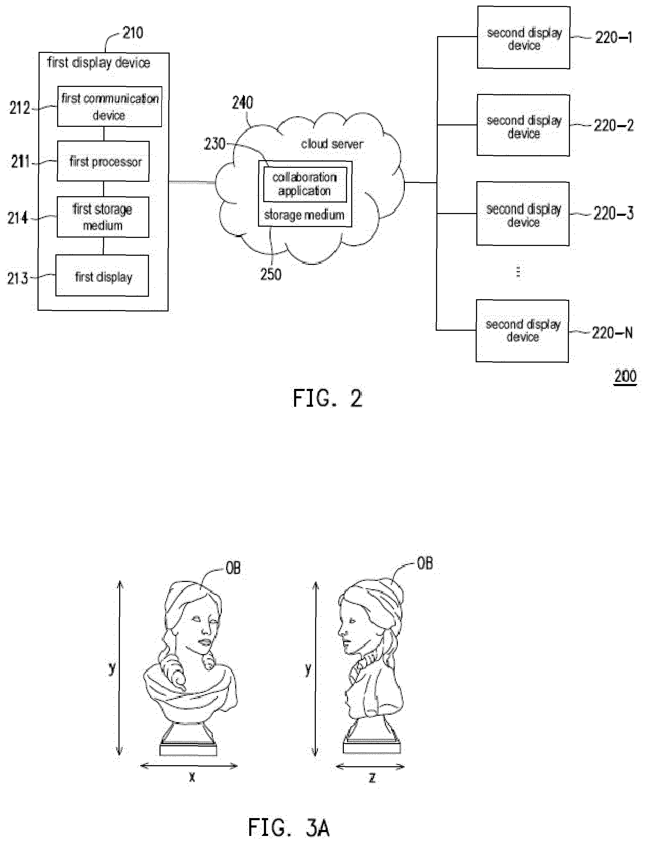

FIG. 2 is a schematic diagram of a collaboration display system according to an embodiment of the disclosure. Referring to FIG. 2, a collaboration display system 200 includes a first display device 210, at least one second display device 220-1 to 220-N, and a cloud server 240. The cloud server 240 includes, for example, a processing device. The first display device 210 includes a first processor 211, a first communication device 212, a first display 213, and a first storage medium 214. The cloud server 240 further includes at least one processor, the communication device and the storage medium as mentioned above. In the embodiment, the processing device comprises the at least one processor, the collaboration application 230 is installed in the cloud server 240. The storage medium 250 in the cloud server 240 may store the collaboration application 230. It should be noted that the first display 213 of the first display device 210 displays an operation interface, which allows a user of the first display device 210 to operate in the operation interface to control the processing device of the cloud server 240 for reading the collaboration application 230. The processing device of the cloud server 240 is configured to execute the collaboration application 230. The operation interface is, for example, an icon, but the disclosure is not limited thereto.

In addition, descriptions of the first processor 211, the first communication device 212, the first display 213, the first storage medium 214, and the second display devices 220-1to 220-N shown in FIG. 2 may be deduced with reference of the related descriptions of the first processor 111, the first communication device 112, the first display 113, the first storage medium 114 and the second display devices 120-1 to 120-N, and details thereof are not repeated.

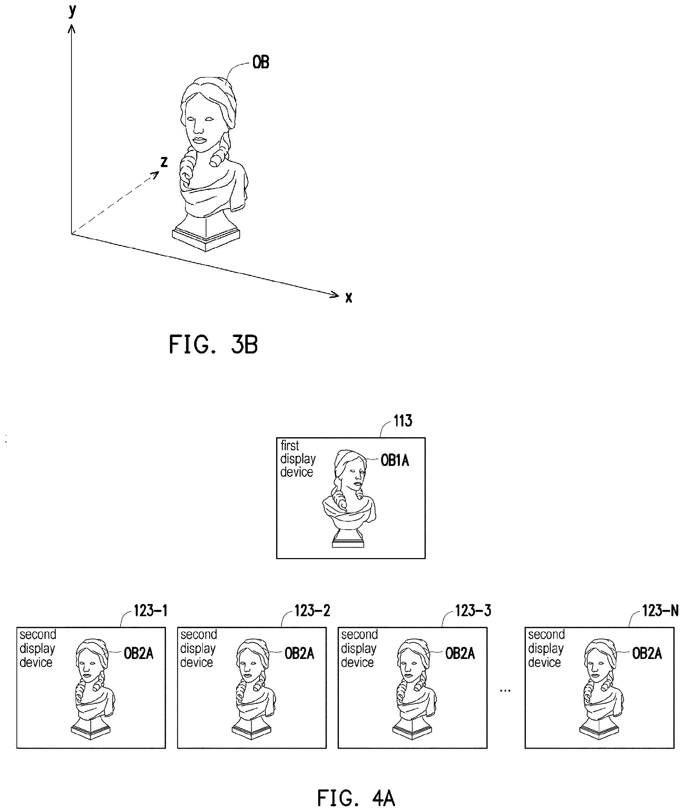

FIG. 3A and FIG. 3B are respectively schematic diagrams of a three-dimensional coordinate system of at least one three-dimensional object according to an embodiment of the disclosure. Referring to FIG. 1, FIG. 3A and FIG. 3B at the same time, when the collaboration application 130 is executed by the first processor 111 (processing device), the collaboration application 130 establishes a three-dimensional coordinate system based on at least one three-dimensional object OB. Specifically, as shown in FIG. 3A, the collaboration application 130 may respectively establish ranges of an x-axis, a y-axis and a z-axis according to a width, a length and a depth of the three-dimensional object OB to establish a three-dimensional coordinate system as shown in FIG. 3B, so as to provide image data including the three-dimensional object OB to the first display 113 of the first display device 110 to display the three-dimensional object OB. Through the collaboration application 130, the second displays 123-1 to 123-N of the second display devices 120-1 to 120-N may display three-dimensional object OB. In an embodiment, the first processor 111 (processing device) executes the collaboration application 130, and the collaboration application 130 establishes the three-dimensional coordinate system based on multiple three-dimensional objects. To be specific, the collaboration application 130 may establish the ranges of the x-axis, the y-axis, and the z-axis based on maximum values of the widths, the lengths, and the depths of the three-dimensional objects. Therefore, the established three-dimensional coordinate system may include the three-dimensional objects, and the first processor 111 provides multiple image data of the three-dimensional objects to the first display 113 to display the three-dimensional objects. Then, through the collaboration application 130, the second displays 123-1 to 123-N of the second display devices 120-1 to 120-N may respectively display the three-dimensional objects.

In the embodiment, through the Internet, the collaboration application 130 of the processing device may be communicatively connected to the second display devices 120-1 to 120-N to change a viewing angle and/or a scaling ratio of the three-dimensional object through the three-dimensional coordinate system established by the collaboration application 130. For example, it is assumed that the user of the second display device 120-1 wants to change a viewing angle and/or scaling ratio of the three-dimensional object OB displayed by the second display 123-1 of the second display device 120-1. The so-called viewing angle refers to an angle at which the user views the three-dimensional object OB through the first display 113 or the second displays 123-1 to 123-N. Changing components of the changed three-dimensional object OB displayed by the second display device 120-1 on the x-axis, y-axis, and z-axis in the three-dimensional coordinate system may satisfy a following equation (1).

$$\begin{bmatrix} P1_x \\ P1_y \\ P1_z \end{bmatrix} = \begin{bmatrix} P1_{x1} \\ P1_{y1} \\ P1_{z1} \end{bmatrix} \times \begin{bmatrix} P1_{rx} \\ P1_{ry} \\ P1_{rz} \end{bmatrix} \times [P1_z] \dots\dots \text{equation (1)}$$

In the equation (1), $P1_x$, $P1_y$ and $P1_z$ are respectively changing components of the changed three-dimensional object OB displayed by the second display device 120-1 on the x-axis, y-axis, and z-axis in the three-dimensional coordinate system. $P1_{x1}$, $P1_{y1}$ and $P1_{z1}$ respectively represent coordinates of the three-dimensional object on the x-axis, y-axis and z-axis of the three-dimensional coordinate system. $P1_{rx}$, $P1_{ry}$ and $P1_{rz}$ respectively represent rotation variable coordinates, which are respectively rotation angles corresponding to the x-axis, y-axis and z-axis when the user of the second display device 120-1 performs a rotation operation on the three-dimensional object OB displayed by the second display device 120-1. $P1_z$ represents a scaling variable, which is a scaling ratio at which the user of the second display device 120-1 performs a scaling operation on the three-dimensional object OB displayed by the second display device 120-1.

In an embodiment, for example, user eye coordinates [P1Eye-x1, P1Eye-y1, P1eye-z1] or a viewing angle direction [P1Eye-dx1, P1Eye-dy1, P1Eye-dz1] may be further added in the equation (1), and the collaboration application 130 may be used for setting or changing the user eye coordinates or setting or changing the viewing angle direction of the user. In addition, it is also applicable when multiple second display devices 120-1, 120-2 to 120-N are used by multiple users.

A distance between the three-dimensional object OB and the viewing angle of the user of the second display device 120-1 when viewing the three-dimensional object OB is further calculated, which is represented by a vector $V$, where the vector $V$ may satisfy a following equation (2).

$$V = O - P_1 = \begin{bmatrix} V_x \\ V_y \\ V_z \end{bmatrix} = \begin{bmatrix} O_x \\ O_y \\ O_z \end{bmatrix} - \begin{bmatrix} P1_{x1} \\ P1_{y1} \\ P1_{z1} \end{bmatrix} \dots\dots (2)$$

In the equation (2), $V_x$, $V_y$ and $V_z$ are respectively components of the vector $V$ on the x-axis, y-axis and z-axis of the three-dimensional coordinate system. A vector $O$ is a viewing angle destination of the user of the second display device 120-1, where $O_x$, $O_y$ and $O_z$ are respectively components of the vector $O$ on the x-axis, y-axis, and z-axis of the three-dimensional coordinate system. A vector $P_1$ is a viewing angle of the user of the second display device 120-1, where $P1_{x1}$, $P1_{y1}$ and $P1_{z1}$ respectively represent viewing angle coordinates of the viewing angle of the user of the second display device 120-1 on the x-axis, y-axis and z-axis of the three-dimensional coordinate system.

In addition, a unit vector value $V_{normal}$ may satisfy the following equation (3).

$$V_{normal} = \frac{O - P_1}{\sqrt{(O_x - P1_{x1})^2 + (O_y - P1_{y1})^2 + (O_z - P1_{z1})^2}} \dots (\text{equation 3})$$

Referring to FIG. 1, FIG. 2 and FIG. 4A at the same time, FIG. 4A is a schematic diagram of display images of the first display 113 and the at least one second display 123-1 according to an embodiment of the disclosure. In the collaboration display system implemented in FIG. 1 and FIG. 2, the first display 113 of the first display device 110 displays an operation interface (not shown), which allows the user of the first display device 110 to operate in the operation interface to control the first processor 111 (processing device) to execute the collaboration application 130. The operation interface is, for example, an icon. In an embodiment, the processing device, such as the at least one processor of the cloud server 240, has the same function. When the processing device executes the collaboration application 130, the processing device generates a virtual page (not shown), the virtual page is the three-dimensional coordinate system established above, a three-dimensional object is formed on the virtual page, so that the first display 113 of the first display device 110 and the at least one second display device 120-1 to 120-N may respectively display the same three-dimensional object on the same virtual page, but each user may control the three-dimensional object to rotate or move through their respective display devices. Details are as follows.

In an embodiment, through the processing device, when the user of the first display device 110 operates the three-dimensional object to rotate, not only the three-dimensional object itself is rotated or scaled, but an entire three-dimensional image is rotated or scaled, i.e., the three-dimensional image including the three-dimensional object and a corresponding background image may all be rotated or scaled. For example, the three-dimensional object is a statue. When the user operates the first display device 110 to rotate the viewing angle to be the back of the statue, the user views the back of the statue and the background in front of the statue. When the user operates the first display device 110 to rotate the viewing angle to be the front of the statue, the user views the front of the statue and the background behind the statue, so that the user may feel an effect formed by the immersive three-dimensional image.

When the collaboration application 130 is executed, the first processor 111 (processing device) of the first display device 110 provides a mode menu. Namely, the first display 113 of the first display device 110 may display a display window for displaying the mode menu for the user of the first display device 110 to select. For example, the mode menu may include multiple display modes, such as a following mode, an exploration mode, and a teaching mode. When one of the display modes (for example, the following mode) in the mode menu is selected, the collaboration application 130 of the processing device may output image data of a three-dimensional object OB2A with a second viewing angle to the second display devices 120-1 to 120-N based on the selected display mode and the three-dimensional coordinate system, where the three-dimensional object OB1A and the three-dimensional object OB2A are the same three-dimensional object.

Accordingly, the first display device 110 may display the three-dimensional object OB1A with the first viewing angle through the first display 113, and the second display devices 120-1 to 120-N may respectively display the three-dimensional object OB2A with the second viewing angle through the second display 123-1 to 123-N. In the embodiment, the first viewing angle is different from the second viewing angle. In this way, the collaboration display system 100 may implement the display function of the three-dimensional object on the two-dimensional display devices (i.e., the first display device 110 and the second display devices 120-1 to 120-N) for multiple people and multiple viewing angles. It should be noted that the image data output by the processing device to the second display devices 120-1 to 120-N does not include a huge amount of information such as three-dimensional data of the original three-dimensional object, but it is only required to provide the image data that has been processed by the processing device, which means that the second display devices 120-1 to 120-N do not need to perform excessive image processing on the three-dimensional object. All image processing such as rotation or movement of the three-dimensional object is performed by the processing device. In addition, when the following mode is selected, the first display device 110 has a one-way control function, and the user of the first display device 110 may control the three-dimensional object with the first viewing angle displayed on the first display 113, and the users of the second display devices 120-1 to 120-N cannot respectively control the viewing angles of the three-dimensional objects displayed on the second displays 123-1 to 123-N, and the second displays 123-1 to 123-N may only display the three-dimensional objects with the second viewing angle, where the first viewing angle is associated with the second viewing angle.

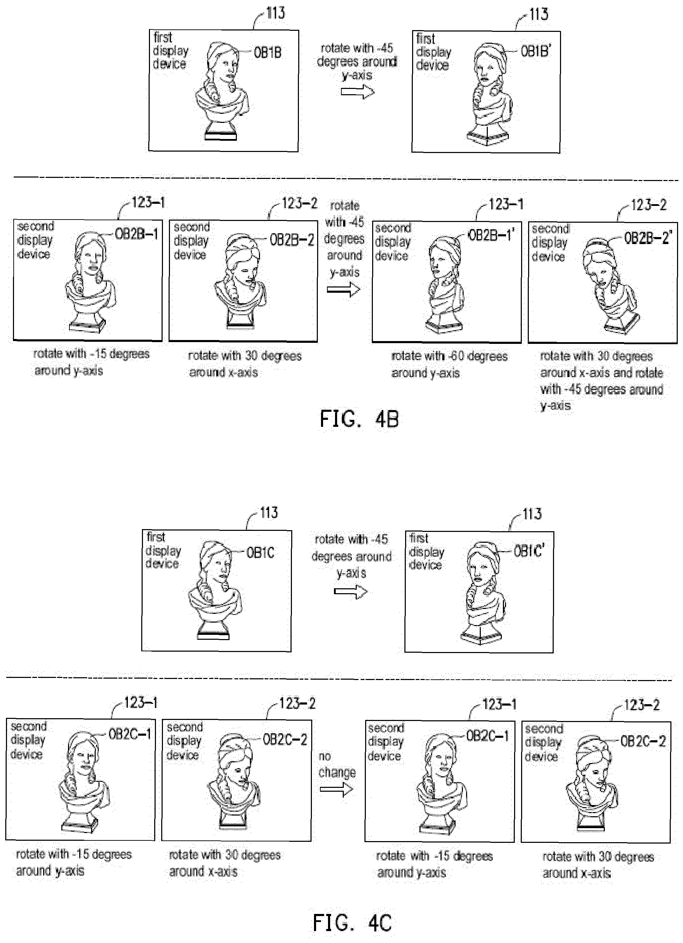

FIG. 4B is a schematic diagram of another following mode according to an embodiment of the disclosure. Referring to both FIG. 1 and FIG. 4B, when the follow mode among the display modes is selected, the first viewing angle is different from the second viewing angle, and the second viewing angle is associated with the first viewing angle. In the embodiment, the mode menu includes N device options respectively corresponding to the second display devices 120-1 to 120-N. When the follow mode among the display modes and at least one of the N device options are selected, the collaboration application 130 may respectively output image data of a three-dimensional object OB2B-1' with the second viewing angle and image data of a three-dimensional object OB2B-2' with a third viewing angle to the second display devices 120-1 and 120-2 corresponding to the selected device options based on the selected display mode (i.e., the following mode), the three-dimensional coordinate system, and the selected device options (for example, the device options corresponding to the second display devices 120-1 and 120-2).

Accordingly, the first display device 110 may display the three-dimensional object OB1B' with the first viewing angle through the first display 113, and the second display devices 120-1 and 120-2 may respectively display the three-dimensional object OB2B-1' with the second viewing angle and the three-dimensional object OB2B-2' with the third viewing angle through the second displays 123-1 and 123-2.

In the embodiment, the first viewing angle is different from the second viewing angle and the third viewing angle, and the second viewing angle is different from the third viewing angle. For example, the viewing angle of the three-dimensional object OB2B-1 may be generated by rotating the three-dimensional object OB1B with -15 degrees around the y-axis, and the viewing angle of the three-dimensional object OB2B-2 may be generated by rotating the three-dimensional object OB1B with 30 degrees around the x-axis. Definition of rotating with negative degrees which is an object rotating around y-axis from right to left of FIG.4B. Definition of rotating with positive degrees which is an object rotating around x-axis from up to down of FIG.4B.

Furthermore, in the following mode, the second viewing angle and the third viewing angle are associated with the first viewing angle. The so-called "associated with" refers to a rotation degree that the three-dimensional object displayed on the first display 113 is rotated, and the second display 123-1 or the second display 123-2 respectively rotates by a same rotation angle according to the rotation angle of the three-dimensional object displayed on the first display 113. For example, when the viewing angle of the three-dimensional object OB1B displayed on the first display 113 is rotated with -45 degrees around the y-axis to become the viewing angle of the three-dimensional object OB1B', the viewing angle of the three-dimensional object OB2B-1 displayed on the second display 123-1 may also be rotated with -45 degrees around the y-axis to become the viewing angle of the three-dimensional object OB2B-1' displayed on the second display 123-1, and the viewing angle of the three-dimensional object OB2B-2 displayed on the second display 123-2 may also be rotated with -45 degrees around the y-axis to become the viewing angle of the three-dimensional object OB2B-2' displayed on the second display 123-2.

In the embodiment, the users of the second display devices 120-1 and 120-2 may respectively change the viewing angles and/or scaling ratios of the three-dimensional objects OB2B-1 and OB2B-2 displayed by the second display devices 120-1 and 120-2 according to their needs, but when the user of the first display device 110 changes the viewing angle and/or scaling ratio of the three-dimensional object OB1B, the viewing angles and/or scaling ratios of the three-dimensional objects OB2B-1, OB2B-2 may also change accordingly. In other words, in the following mode, display content of the second display devices 120-1 and 120-2 is associated with display content of the first display device 110.

For example, taking the second display device 120-1 as an example, it is assumed that in the following mode, the user of the second display device 120-1 wants to change the viewing angle and/or scaling ratio of the three-dimensional object OB2B-1 displayed by the second display device 120-1. Changing components of the changed three-dimensional object OB2B-1' displayed by the second display device 120-1 on the x-axis, y-axis and z-axis in the three-dimensional coordinate system may satisfy a following equation (4).

$$
\begin{bmatrix} P1a_x \\ P1a_y \\ P1a_z \end{bmatrix} = \left[ \begin{bmatrix} P1a_{x1} \\ P1a_{y1} \\ P1a_{z1} \end{bmatrix} \times \begin{bmatrix} P1a_{rx1} \\ P1a_{ry1} \\ P1a_{rz1} \end{bmatrix} + \begin{bmatrix} Pa_{rx} \\ Pa_{ry} \\ Pa_{rz} \end{bmatrix} \right] \times [P_z] \ldots \text{equation (4)}
$$

In the equation (4), $P1a_x$, $P1a_y$ and $P1a_z$ are respectively changing components of the changed three-dimensional object OB2B-1' displayed by the second display device 120-1 on the x-axis, y-axis and z-axis in the three-dimensional coordinate system. $P1a_{x1}$, $P1a_{y1}$ and $P1a_{z1}$ respectively represent viewing angle coordinates of the viewing angle of the user of the second display device 120-1 on the x-axis, y-axis and z-axis of the three-dimensional coordinate system. $P1a_{rx1}$, $P1a_{ry1}$ and $P1a_{rz1}$ respectively represent rotation vectors of the user of the second display device 120-1. $Pa_{rx}$, $Pa_{ry}$ and $Pa_{rz}$ respectively represent rotation angles corresponding to the x-axis, y-axis and z-axis when the user of the first display device 110 performs a rotation operation on the three-dimensional object OB1B displayed on the first display device 110. $Pz$ represents a scaling ratio when the user of the first display device 110 performs a scaling operation on the three-dimensional object OB1B displayed by the first display device 110. In this way, the collaboration display system 100 may implement the interactive display and collaboration functions of the three-dimensional object on the two-dimensional display devices (i.e., the first display device 110 and the second display devices 120-1 to 120-2) in the following mode for multiple people and multiple viewing angles.

FIG. 4C is a schematic diagram of an exploration mode according to an embodiment of the disclosure. Referring to both FIG. 1 and FIG. 4C, when the exploration mode among the display modes is selected, the first viewing angle is different from the second viewing angle, and the second viewing angle is not associated with the first viewing angle. In the embodiment, the mode menu includes N device options respectively corresponding to the second display devices 120-1 to 120-N.

When the exploration mode among the display modes and the device option corresponding to the second display devices 120-1 and 120-2 among the N device options are selected, the collaboration application 130 may respectively output the image data of the three-dimensional object OB2C-1 with the second viewing angle and the image data of the three-dimensional object OB2C-2 with the third viewing angle to the second display devices 120-1 and 120-2 based on the selected display mode (i.e., the exploration mode), the three-dimensional coordinate system, and the selected device option (i.e., the device option corresponding to the second display devices 120-1 and 120-2).

Accordingly, the first display device 110 may display the three-dimensional object OB1C with the first viewing angle through the first display 113, and the second display devices 120-1 and 120-2 may respectively display the three-dimensional object OB2C-1 with the second viewing angle and the three-dimensional object OB2C-2 with the third viewing angle through the second displays 123-1, 123-2.

In the embodiment, the first viewing angle is different from the second viewing angle and the third viewing angle, and the second viewing angle is different from the third viewing angle. For example, the viewing angle of the three-dimensional object OB2C-1 may be generated by rotating the viewing angle of the three-dimensional object OB1C with -15 degrees around the y-axis, and the viewing angle of the three-dimensional object OB2C-2 may be generated by rotating the viewing angle of the three-dimensional object OB1C with 30 degrees around the x-axis.

Furthermore, in the exploration mode, the second viewing angle and the third viewing angle are not associated with the first viewing angle, and the viewing angle of the three-dimensional object may be arbitrarily moved or rotated by the user of each display device. For example, when the viewing angle of the three-dimensional object OB1C displayed on the first display 113 is rotated with -45 degrees around the y-axis to become the viewing angle of the three-dimensional object OB1C' displayed on the first display 113, the viewing angle of the three-dimensional object OB2C-1 displayed on the second display 123-1 and the viewing angle of the three-dimensional object OB2C-2 displayed on the second display 123-2 may not be changed accordingly.

In the embodiment, the users of the second display devices 120-1 and 120-2 may arbitrarily change the viewing angles and/or scaling ratios of the three-dimensional objects OB2C-1, OB2C-2 according to actual needs, and when the user of the first display device 110 changes the viewing angle and/or scaling ratio of the three-dimensional object OB1C, the viewing angles and/or scaling ratios of the three-dimensional objects OB2C-1 and OB2C-2 may not be changed accordingly. In other words, in the exploration mode, the display content of the second display devices 120-1 and 120-2 has nothing to do with the display content of the first display device 110. In an embodiment, when the first display device 110 selects the exploration mode, the users of the second display devices 120-1 and 120-2 may arbitrarily control the viewing angles of the three-dimensional objects respectively displayed on the second displays 123-1 and 123-2. In detail, taking the second display device 120-1 as an example, the user of the second display device 120-1 transmits a control signal (for example, an operation of rotating the viewing angle of the three-dimensional object OB2C-1 around the y-axis) to the second processor 121-1 through an operating device such as a mouse or a touch device, and the second processor 121-1 transmits the control signal to the processing device through the second communication device 122-1. By changing the viewing angle of the three-dimensional object OB2C-1 through the collaboration application 130 of the processing device, the processing device may transmit the changed image data of the three-dimensional object OB2C-1 back to the second display device 120-1, and the second display 123-1 displays three-dimensional object OB2C-1 with a different viewing angle.

In an embodiment, taking the second display devices 120-1 and 120-2 as an example, it is assumed that in the exploration mode, the user of the second display device 120-1 wants to change the viewing angle of the three-dimensional object OB2C-1, and the user of the second display device 120-2 wants to change the viewing angle of the three-dimensional object OB2C-2. Changing components of the changed three-dimensional objects OB2C-1 and OB2C-2 respectively displayed by the second display devices 120-1 and 120-2 on the x-axis, y-axis and z-axis in the three-dimensional coordinate system satisfy following equations (5) and (6).

$$\begin{bmatrix} P1b_x \\ P1b_y \\ P1b_z \end{bmatrix} = \begin{bmatrix} P1b_{x1} \\ P1b_{y1} \\ P1b_{z1} \end{bmatrix} \dots\dots (5)$$

$$\begin{bmatrix} P2b_x \\ P2b_y \\ P2b_z \end{bmatrix} = \begin{bmatrix} P2b_{x1} \\ P2b_{y1} \\ P2b_{z1} \end{bmatrix} \dots\dots (6)$$

In the equations (5) and (6), $P1b_x$, $P1b_y$ and $P1b_z$ are respectively changing components of the changed three-dimensional object OB2C-1 displayed on the second display device 120-1 on the x-axis, y-axis and z-axis in the three-dimensional coordinate system. $P1b_{x1}$, $P1b_{y1}$ and $P1b_{z1}$ respectively represent viewing angle coordinates of the viewing angle of the user of the second display device 120-1 on the x-axis, y-axis and z-axis of the three-dimensional coordinate system. $P2b_x$, $P2b_y$ and $P2b_z$ are respectively an x-axis coordinate, a y-axis coordinate and a z-axis coordinate of the changed three-dimensional object OB2C-2 displayed on the second display device 120-2 in the three-dimensional coordinate system. $P2b_{x1}$, $P2b_{y1}$ and $P2b_{z1}$ respectively represent viewing angle coordinates of the viewing angle of the user of the second display device 120-2 on the x-axis, y-axis and z-axis of the three-dimensional coordinate system. In this way, the collaboration display system 100 may implement the interactive display functions of the three-dimensional object on the two-dimensional display devices (i.e., the first display device 110 and the second display devices 120-1 to 120-2) in the exploration mode for multiple people and multiple viewing angles.

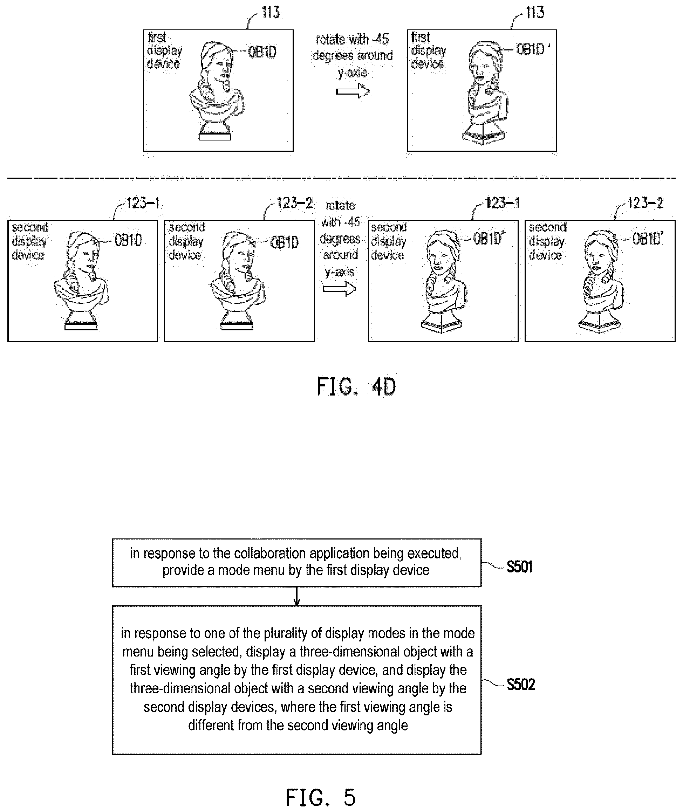

FIG. 4D is a schematic diagram of a teaching mode according to an embodiment of the disclosure. Referring to both FIG. 1 and FIG. 4D, when the teaching mode among the display modes is selected, the first viewing angle is equal to the second viewing angle, and the second viewing angle is changed based on the first viewing angle. In the embodiment, the mode menu includes N device options respectively corresponding to the second display devices 120-1 to 120-N.

For example, when the teaching mode among the display modes and the device option corresponding to the second display devices 120-1 and 120-2 among the N device options are selected, the collaboration application 130 may output image data of a three-dimensional object OB1D with the first viewing angle to the second display devices 120-1 and 120-2 based on the selected display mode (i.e., the teaching mode), the three-dimensional coordinate system, and the device option corresponding to the second display devices 120-1 and 120-2. Accordingly, the first display device 110 may display the three-dimensional object OB 1D with the first viewing angle through the first display 113, and the second display devices 120-1 and 120-2 may respectively display the three-dimensional object OB 1D with the first viewing angle through the second displays 123-1 and 123-2.

Furthermore, in the teaching mode, the second viewing angle is changed based on the first viewing angle. For example, when a viewing angle of the three-dimensional object OB1D displayed on the first display 113 is rotated with -45 degrees around the y-axis to become a viewing angle of a three-dimensional object OB1D' displayed on the first display 113, the viewing angle of the three-dimensional object OB1D displayed on the second displays 123-1 and 123-2 may also be rotated with -45 degrees around the y-axis to become a viewing angle of the three-dimensional object OB1D' displayed on the second displays 123-1 and 123-2.

In the embodiment, the users of the second display devices 120-1 and 120-2 cannot arbitrarily change the viewing angle of the three-dimensional object OB1D' displayed by the second display devices 120-1 and 120-2, and when the user of the first display device 110 changes the viewing angle of the three-dimensional object OB1D displayed on the first display device 110, the viewing angle of the three-dimensional object OB1D' displayed on the second displays 123-1 and 123-2 may be also accordingly changed. In other words, in the teaching mode, the display contents of the second display devices 120-1 and 120-2 are identical to the display content of the first display device 110. The first display device 110 has a one-way control function, so that the user of the first display device 110 may control the three-dimensional object with the first viewing angle displayed on the first display 113, and the users of the second display devices 120-1 and 120-N cannot respectively control the viewing angles of the three-dimensional objects displayed on the second displays 123-1 to 123-N, and the second displays 123-1 to 123-N may only display the three-dimensional objects with the first viewing angle.

For example, when the user of the first display device 110 wants to change the viewing angle of the three-dimensional object OB1D, changing components of the changed three-dimensional object OB1D' displayed by the second display devices 120-1 and 120-2 on the x-axis, y-axis and z-axis in the three-dimensional coordinate system may satisfy following equations (7) and (8).

$$\begin{bmatrix} P1c_x \\ P1c_y \\ P1c_z \end{bmatrix} = \begin{bmatrix} Pc_x \\ Pc_y \\ Pc_z \end{bmatrix} \dots\dots(\text{equation 7})$$

$$\begin{bmatrix} P2c_x \\ P2c_y \\ P2c_z \end{bmatrix} = \begin{bmatrix} Pc_x \\ Pc_y \\ Pc_z \end{bmatrix} \dots\dots(\text{equation 8})$$

In the equations (7) and (8), $Pc_x$, $Pc_y$ and $Pc_z$ respectively represent viewing angle coordinates of the viewing angle of the user of the first display device 110 on the x-axis, y-axis and z-axis of the three-dimensional coordinate system. $P1c_x$, $P1c_y$ and $P1c_z$ are respectively changing components of the changed three-dimensional object OB1D' displayed by the second display device 120-1 on the x-axis, y-axis and z-axis in the three-dimensional coordinate system. $P2c_x$, $P2c_y$ and $P2c_z$ are respectively changing components of the changed three-dimensional object OB1D' displayed by the second display device 120-2 on the x-axis, y-axis and z-axis in the three-dimensional coordinate system. In this way, the collaboration display system 100 may implement a synchronization function of three-dimensional objects on the two-dimensional display devices (i.e., the first display device 110 and the second display devices 120-1 and 120-2) in the teaching mode.

In an embodiment, the implementation content of FIG. 4A to FIG. 4D may also be implemented by the collaboration display system 200 of FIG. 2.

FIG. 5 is a flowchart of an operation method of a collaboration display system according to an embodiment of the disclosure. Referring to FIG. 1, FIG. 4A and FIG. 5 at the same time, in the embodiment, steps S501 and S502 are implemented by the first display device 110 and the second display devices 120-1 to 120-N of the collaboration display system 100 in FIG. 1. In step S501, in response to the collaboration application 130 being executed, a mode menu is provided by the first display device 110 for displaying. In step S502, in response to one of the display modes in the mode menu being selected, the three-dimensional object OB1A with the first viewing angle is displayed by the first display device 110, and the three-dimensional object OB2A with the second viewing angle is displayed by the second display devices 120-1 to 120-N, where the first viewing angle is different from the second viewing angle. Regarding implementation details of step S501 and step S502, reference may be made to the detailed description in the above embodiment, and details thereof are not repeated. In addition, in an embodiment, step S501 and step S502 may also be implemented by the first display device 210 and the second display devices 220-1 to 220-N of the collaboration display system 200 of FIG. 2.

In summary, the collaboration display system and the operation method thereof according to the embodiments of the disclosure have at least one of the following advantages: a collaboration application may be used to establish a three-dimensional coordinate system of a three-dimensional object, so as to provide image data including the three-dimensional object to two-dimensional display devices (a first display device and at least a second display device). Different image data may be provided to the second display devices through the collaboration application based on the selected display mode and three-dimensional coordinate system, and multiple display modes be provided according to actual needs. The collaboration application may be used to provide different image data to different second display devices based on the selected display mode, the selected device option and the three-dimensional coordinate system, so as to provide a more flexible collaborative display method. The collaboration application may be used to implement interactive display and collaboration functions of three-dimensional objects on two-dimensional display devices for multiple people and multiple viewing angles.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A collaboration display system, comprising:

   a first display device (110);
   at least one second display device (120), communicatively connected to the first display device (110) by Internet; and
   a processing device (111), communicatively connected to the at least one second display device (120) by the Internet, and configured to execute a collaboration application (130), wherein
   the first display device (120) is configured to provide a mode menu for displaying through the collaboration application (130), and
   in response to one of a plurality of display modes in the mode menu being selected, the first display device (110) is configured to display at least one three-dimensional object (OB) with a first viewing angle and the at least one second display device (120) is configured to display the at least one three-dimensional object (OB) with a second viewing angle, wherein the first viewing angle is different from the second viewing angle.

2. The collaboration display system according to claim 1, wherein in response to a following mode among the plurality of display modes being selected, the first viewing angle is different from the second viewing angle, and the second viewing angle is associated with the first viewing angle.

3. The collaboration display system according to claim 1, wherein in response to an exploration mode among the plurality of display modes being selected, the first viewing angle is different from the second viewing angle, and the second viewing angle is not associated with the first viewing angle.

4. The collaboration display system according to claim 1, wherein in response to a teaching mode among the plurality of display modes being selected, the first viewing angle is equal to the second viewing angle, and the second viewing angle is changed based on the first viewing angle.

5. The collaboration display system according to claim 1, wherein in response to the collaboration application (130) being executed by the processing device (111), the collaboration application (130) is configured to establish a three-dimensional coordinate system based on the at least one three-dimensional object (OB).

6. The collaboration display system according to claim 5, wherein in response to one of the plurality of display modes being selected, through the collaboration application (130), the processing device (111) is configured to output image data of the at least one three-dimensional object with the second viewing angle to the at least one second display device (120) based on the selected display mode and the three-dimensional coordinate system.

7. The collaboration display system according to claim 6, wherein the mode menu comprises at least one device option respectively corresponding to the at least one second display device (120), in response to one of the plurality of display modes and at least one of the at least one device option being selected, through the collaboration application (130), the processing device (111) is configured to output image data of the at least one three-dimensional object with the second viewing angle to the at least one second display device (120) corresponding to the selected device option based on the selected display mode, the three-dimensional coordinate system and the selected device option.

8. The collaboration display system according to any one of the preceding claims, wherein the processing device (111) is provided in the first display device or the processing device (111) is provided in a cloud server.

9. An operation method of a collaboration display system, comprising:

providing a mode menu for displaying by a first display device (110) in response to a collaboration application being executed by a processing device (111); and
in response to one of a plurality of display modes in the mode menu being selected, displaying at least one three-dimensional object (OB) with a first viewing angle by the first display device (110), and displaying the at least one three-dimensional object (OB) with a second viewing angle by at least one second display device (120), wherein the first viewing angle is different from the second viewing angle.

10. The operation method according to claim 9, wherein in response to a following mode among the plurality of display modes being selected, the first viewing angle is different from the second viewing angle, and the second viewing angle is associated with the first viewing angle; or in response to an exploration mode among the plurality of display modes being selected, the first viewing angle is different from the second viewing angle, and the second viewing angle is not associated with the first viewing angle; or in response to a teaching mode among the plurality of display modes being selected, the first viewing angle is equal to the second viewing angle, and the second viewing angle is changed based on the first viewing angle.

11. The operation method according to claim 9 or 10, further comprising:

in response to the collaboration application (130) being executed by the processing device (111), establishing a three-dimensional coordinate system by the collaboration application based on the at least one three-dimensional object,
preferably further comprising:
in response to one of the plurality of display modes being selected, through the collaboration application, outputting image data of the at least one three-dimensional object with the second viewing angle to the at least one second display device by the processing device based on the selected display mode and the three-dimensional coordinate system.

12. The operation method according to claim 11, further comprising:
in response to one of the plurality of display modes and at least one of the at least one device option being selected, through the collaboration application, outputting image data of the at least one three-dimensional object with the second viewing angle to the at least one second display device corresponding to the selected device option by the

EP 4 546 099 A1

processing device based on the selected display mode, the three-dimensional coordinate system and the selected device option.

13. The operation method according to claim 9, wherein the processing device (111) is provided in the first display device (110).

14. The operation method according to claim 9, wherein the processing device (111) is provided in a cloud server.

15. A non-transitory processing device readable medium storing a collaboration application, executed by a processing device to perform an operation method, the method comprising:

providing a mode menu for displaying by a first display device (110) in response to the collaboration application (130) being executed; and
in response to one of a plurality of display modes in the mode menu being selected, displaying at least one three-dimensional object (OB) with a first viewing angle by the first display device (110), and displaying the at least one three-dimensional object with a second viewing angle by at least one second display device (120), wherein the first viewing angle is different from the second viewing angle.

FIG. 1

FIG. 2

FIG. 3A

y

OB

z

x

FIG. 3B

113

first display device

OB1A

123-1

second display device

OB2A

123-2

second display device

OB2A

123-3

second display device

OB2A

123-N

second display device

OB2A

...

FIG. 4A

FIG. 4B

FIG. 4C

first
display
device ⌐113

OB1D

rotate with -45
degrees around
y-axis
⇒

first
display
device ⌐113

OB1D'

second
display
device ⌐123-1

OB1D

second
display
device ⌐123-2

OB1D

rotate
with -45
degrees
around
y-axis
⇒

second
display
device ⌐123-1

OB1D'

second
display
device ⌐123-2

OB1D'

FIG. 4D

in response to the collaboration application being executed,
provide a mode menu by the first display device ⌐S501

in response to one of the plurality of display modes in the mode
menu being selected, display a three-dimensional object with a
first viewing angle by the first display device, and display the
three-dimensional object with a second viewing angle by the
second display devices, where the first viewing angle is
different from the second viewing angle ⌐S502

FIG. 5

## EUROPEAN SEARCH REPORT

Europäisches
Patentamt
European
Patent Office
Office européen
des brevets

**Application Number**

EP 24 20 4991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AGUSTINA ET AL: "Televiewpointer an integrated workspace awareness widget for real-time collaborative 3d design systems", PROCEEDINGS OF THE 23RD INTERNATIONAL CONFERENCE ON SUPERCOMPUTING, ACMPUB27, NEW YORK, NY, USA, 7 November 2010 (2010-11-07), pages 21-30, XP058932289, DOI: 10.1145/1880071.1880075 ISBN: 978-1-4503-1486-2 * page 22 - page 29; figures 2, 5, 6 * | 1-15 | INV. G06F3/04815 G06F3/14 |
| A | AGUSTINA ET AL: "CoMaya incorporating advanced collaboration capabilities into 3d digital media design tools", COMPUTER SUPPORTED COOPERATIVE WORK, ACM, 2 PENN PLAZA, SUITE 701 NEW YORK NY 10121-0701 USA, 8 November 2008 (2008-11-08), pages 5-8, XP058594344, DOI: 10.1145/1460563.1460566 ISBN: 978-1-60558-007-4 * the whole document * | 1,9,15 | |
| A | NYSETVOLD TOM ET AL: "Collaboration tools for multi-user CAD", PROCEEDINGS OF THE 2013 IEEE 17TH INTERNATIONAL CONFERENCE ON COMPUTER SUPPORTED COOPERATIVE WORK IN DESIGN (CSCWD), IEEE, 27 June 2013 (2013-06-27), pages 241-245, XP032476961, DOI: 10.1109/CSCWD.2013.6580969 ISBN: 978-1-4673-6084-5 [retrieved on 2013-08-14] * the whole document * | 1-15 | |

**TECHNICAL FIELDS SEARCHED (IPC)**

G06F

-/--

The present search report has been drawn up for all claims

| Place of search | Date of completion of the search | Examiner |
|---|---|---|
| Berlin | 26 February 2025 | Reise, Berit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 20 4991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/107991 A1 (SPIVACK NOVA [US] ET AL) 11 April 2019 (2019-04-11) * paragraph [0393] - paragraph [0429]; figures 11,1 * ----- | 1,9,15 | |
| A | US 2021/034319 A1 (WANG NORMAN N [US] ET AL) 4 February 2021 (2021-02-04) * paragraph [0021] - paragraph [0084]; figures 1,2 , 3, 4,5 * ----- | 1,9,15 | |

**TECHNICAL FIELDS
SEARCHED     (IPC)**

The present search report has been drawn up for all claims

| Place of search | Date of completion of the search | Examiner |
|---|---|---|
| Berlin | 26 February 2025 | Reise, Berit |

EPO FORM 1503 03.82 (P04C01)

## ANNEX TO THE EUROPEAN SEARCH REPORT
## ON EUROPEAN PATENT APPLICATION NO.

EP 24 20 4991

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2025

| Patent document cited in search report | Publication date | Patent family member(s) | | Publication date |
|---|---|---|---|---|
| US 2019107991 A1 | 11-04-2019 | US | 2019107990 A1 | 11-04-2019 |
| | | US | 2019107991 A1 | 11-04-2019 |
| | | US | 2019108578 A1 | 11-04-2019 |
| | | WO | 2019055703 A2 | 21-03-2019 |
| US 2021034319 A1 | 04-02-2021 | CN | 112020731 A | 01-12-2020 |
| | | EP | 3785235 A1 | 03-03-2021 |
| | | KR | 20200135496 A | 02-12-2020 |
| | | US | 2021034319 A1 | 04-02-2021 |
| | | WO | 2019209608 A1 | 31-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 112140954